# EUROPÄISCHE PATENTSCHRIFT

(11) **EP 2 490 045 B1**
(45) Veröffentlichungstag und Bekanntmachung des Hinweises auf die Patenterteilung: **01.05.2013**
(21) Anmeldenummer: 12150478.1
(22) Anmeldetag: 09.01.2012
(51) Int. Cl.: G01V 8/10, H04B 1/7095

(54) **Optoelektronischer Sensor und Verfahren zur Erfassung von Objekten**
Optoelectronic sensor and method for detecting objects
Capteur optoélectronique et procédé destiné à la détection d'objets

(30) Priorität: 21.02.2011 DE 102011000857
(43) Veröffentlichungstag der Anmeldung: 22.08.2012
(73) Patentinhaber: Sick AG, 79183 Waldkirch (DE)
(72) Erfinder: Merettig, Gerhard, 79350 Sexau (DE); Waslowski, Kai, 79312 Emmendingen (DE); Hauske, Maximilian, 68165 Mannheim (DE)
(74) Vertreter: Hehl, Ulrich

(56) Entgegenhaltungen:
- EP-A2- 0 793 357
- EP-A2- 0 819 881
- EP-A2- 0 982 860
- DE-A1- 19 926 214
- DE-U1-202008 014 137
- US-A- 5 610 939
- US-A1- 2009 016 735

## Beschreibung

Die Erfindung betrifft einen optoelektronischen Sensor und ein Verfahren zur Erfassung von Objekten nach dem Oberbegriff von Anspruch 1 beziehungsweise 14.

Zahlreiche optoelektronische Sensoren arbeiten mit dem Prinzip, einen Sendelichtstrahl aktiv auszusenden und in einem Detektor wieder zu empfangen. Ein sehr häufig eingesetzter derartiger Sensor ist eine Lichtschranke, welche die Anwesenheit eines Objekts daran feststellt, ob der Lichtstrahl unterbrochen ist oder nicht, und ein entsprechendes Schaltsignal ausgibt. Lichtschranken sind als Einweglichtschranken bekannt, in denen der Lichtempfänger dem Lichtsender gegenüber angeordnet ist und der Lichtstrahl dazwischen einen Überwachungsbereich aufspannt. Weiterhin gibt es Reflexionslichtschranken, in denen Lichtsender und Lichtempfänger auf der gleichen Seite angeordnet sind und der Lichtstrahl mit Hilfe eines Reflektors, häufig eines Retroreflektors, zurückgeworfen wird und somit den Überwachungsbereich zweimal durchquert.

Ähnlich wie eine Reflexionslichtschranke ist ein Lichttaster aufgebaut, wobei der Lichttaster nicht auf einen kooperativen Reflektor, sondern in den freien Raum gerichtet ist, und somit in Umkehrung des Lichtschrankenprinzips Sendelicht gerade dann empfängt, wenn ein Objekt in den Sendestrahl tritt. Dabei gibt es innerhalb der Lichttaster unterschiedliche Ausführungen. Ein energetischer Taster bewertet für eine binäre Objektfeststellung die Intensität des Empfängersignals anhand einer Schaltschwelle. Bei einem Triangulationstaster stehen die optischen Achsen von Lichtsender und Lichtempfänger schräg zueinander, und mit Hilfe eines ortsauflösenden Lichtempfängers kann der Winkel gemessen werden, unter dem ein Objekt erfasst wird. Dadurch wird eine Entfernungsbestimmung ermöglicht. Hintergrundausblendende Lichttaster bilden eine Art Hybrid. Wie in einem energetischen Lichttaster wird lediglich ein binäres Objektfeststellungssignal jektfeststellungssignal erzeugt und kein Entfernungswert gemessen. Zugleich wird aber der Aufbau eines Triangulationstasters ausgenutzt, um die Objekterfassung auf einen bestimmten Entfernungsbereich zu beschränken und Empfangssignale von Objekten außerhalb dieses Entfemungsbereichs als Hintergrundsignal auszublenden.

Eine Herausforderung für derartige Sensoren besteht darin, das eigene Lichtsignal auch unter Fremdlichteinfluss sicher zu erkennen. Im Stand der Technik sind Sensoren beschrieben, die dafür Strahlcodierungen verwenden. Aus der EP 2 015 110 A1 beispielsweise ist ein optoelektronischer Sensor bekannt, bei dem das ausgesandte Licht mit einem Pseudozufallsrauschcode moduliert wird. Empfangsseitig ist der Pseudozufallscode bekannt, so dass dort die Sendesequenz wieder decodierbar ist. Dadurch wird in einem Bandspreizverfahren die Sendeenergie spektral verteilt, so dass der Einfluss gerade schmalbandiger Störer vermindert wird. Da es kein negatives Lichtsignal gibt, werden die verwendeten Codesequenzen, die üblicherweise die Werte {-1,1} annehmen, zunächst mit einem Offset beaufschlagt und dann renormiert, so dass die Codesequenz als unipolares Signal mit den Werten {0,1} übertragen werden kann. Außerdem ist eine optische Synchronisation zwischen Sender und Empfänger vorgesehen, bei welcher empfangsseitig ein Maximum der Kreuzkorrelation zwischen dem ihm bekannten Pseudozufallsrauschcode und dem Empfangssignal aufgefunden wird.

In dem optoelektronischen Sensor nach der EP 2 226 650 A1 werden ebenfalls solche mit einem Offset beaufschlagte Pseudozufallssequenzen zur Störungsunterdrückung eingesetzt. Dabei werden fortlaufend die vorliegenden Störungen spektral analysiert und die Codierung dann so angepasst, dass den Störern ausgewichen wird.

Die DE 20 2008 014 137 U1 beschreibt einen Lichtvorhang, dessen Empfängereinheit einen Synchrondemodulator aufweist. Durch dessen Einsatz sowie spezielle übertragene Codes können aus den Empfangssignalen der Empfänger Nutzsignalanteile herausgefiltert und Störsignalanteile eliminiert werden.

Pseudozufallsrauschcodes oder PN-Sequenzen (Pseudo Noise) werden allgemein in der Nachrichtentechnik zur Datenübertragung verwendet, wie beispielsweise in J. G. Proakis "Digital Communications", McGar-Hill, 2001 beschrieben. Ein solches Verfahren wird als DSSS (Direct Sequence Spread Spectrum) bezeichnet.

Die herkömmliche Art der Strahlcodierung und vor allem der Entspreizung und Detektion durch Korrelation hat aber eine Reihe von Nachteilen. Zum einen stellt sie sehr hohe Anforderungen an dewAnalog/Digitalwandler und den Signalprozessor, die zu hohen Kosten führen. Vor allem wird aber zur Detektion jeweils eine längere PN-Sequenz als Block gesendet und anschließend blockweise korreliert. Damit stehen Detektionsergebnisse nur jeweils nach einem Zeitintervall zur Verfügung, welches dem Block beziehungsweise der Länge der PN-Sequenz entspricht. Für die speziellen Anforderungen der Objektdetektion ist dies ungenügend. Objekte können in üblichen Anwendungen zu beliebigen Zeitpunkten in den Erfassungsbereich ein- und aus diesem herausfahren. Wegen der blockweisen Korrelation ist aber die Zeitauflösung der Objekterfassung gering, so dass sich wie bei einer langsamen Abtastung der Zeitpunkt des Ein- und Ausfahrens nur ungenau bestimmen lässt. Daraus resultiert ein hoher, unerwünschter Jitter des Schaltzeitpunkts des Sensors. Hinzu kommt außerdem eine Verzögerung des Schaltzeitpunkts, weil zunächst ein Block empfangen werden muss, ehe eine Schaltentscheidung getroffen werden kann.

Aus der US 5 610 939 ist eine Signalverarbeitungseinheit für eine Spread-Spectrum-Kommunikation bekannt. In deren digitalen Korrelatoren wird in einigen Ausführungsformen eine gleitende Korrelation implementiert, wobei die D3 nicht näher ausführt, was darunter zu verstehen ist.

Die EP 0 793 357 A2 offenbart einen Korrelator, der dazu dient, die Synchronisation eines Spread-Spectrum-Empfängers mit dem empfangenen Signal herzustellen und aufrecht zu erhalten.

In der EP 0 982 860 A2 wird ein matched filter in inem Spread-Spectrum-Empfänger beschrieben, der eine Vielzahl von Korrelatoren entsprechend der Anzahl der Filterkanäle aufweist.

Es ist daher Aufgabe der Erfindung, die Objekterfassung bei Verwendung von codiertem Sendelicht zu verbessern.

Diese Aufgabe wird durch einen optoelektronischen Sensor und ein Verfahren zur Erfassung von Objekten nach Anspruch 1 beziehungsweise 14 gelöst. Dabei geht die Erfindung von dem Grundgedanken aus, keine blockweise Korrelation, sondern eine gleitende Auswertung mit zeitlicher Gewichtung des Empfangssignals vorzunehmen.

Rekursiv wird dabei das vorliegende, zuvor bestimmte Korrelationssignal modifiziert. Zur Modifikation wird jeweils das Empfangssignal mit der Codefolge verglichen. Je nach Übereinstimmung wird das vorliegende Korrelationssignal dann auf Basis des anliegenden Empfangssignals erhöht oder nicht. Als Korrelationssignal genügt hier demnach eine skalare Größe, die auch durch skalare Größen modifiziert wird, im Gegensatz zu einer blockweisen Korrelation, wo jeweils eine Korrelationsfunktion aus zwei Eingangsfunktionen zu berechnen ist.

Empfangssignal und Codefolge sollten bei der Prüfung auf Übereinstimmung phasenrichtig zueinander sein. Das ist bei einem Lichtsender und einem Lichtempfänger in großer räumlicher Nähe, beispielsweise in demselben Gehäuse, und einer Signallaufzeit deutlich größer der Pulsbreiten sehr leicht zu gewährleisten. Andernfalls kann die notwendige Phase eingelernt werden.

Die erfindungsgemäße Lösung hat den Vorteil, dass eine sehr einfache Korrelationseinheit genügt, die speziell an die Anforderungen der Objektdetektion angepasst und dadurch kosten- und aufwandsminimiert ist. Dennoch ist die Leistungsfähigkeit der Korrelationseinheit für ihre Anwendung wesentlich höher als bei einer klassischen Korrelation. Der Schaltzeitpunkt wird mit geringer Verzögerung und mit deutlich reduziertem Jitter bestimmt. Der Speicherbedarf wird gegenüber einer blockweisen Korrelation, aber auch gegenüber einer Korrelation mit einem gleitenden rechteckigen Zeitfenster minimiert. Insbesondere ist dazu eine rekursive Struktur vorgesehen, bei der jeweils die bisherige Schätzung der Korrelation in einer Feedback-Schleife durch die hinzukommenden Daten modifiziert wird. Mit den erfindungsgemäßen Maßnahmen können die allgemeinen Vorzüge der Sendercodierung, nämlich die verbesserte Störfestigkeit gegenüber optischen und elektrischen Störungen, ohne Nachteile gegenüber Sensoren mit herkömmlichen, einfachen Pulssignalen erhalten werden.

Die Korrelationseinheit weist bevorzugt ein exponentielles Abklingverhalten auf, indem ein Dämpfungsglied vorgesehen ist, um das vorliegende Korrelationssignal um einen ersten Faktor zu dämpfen, wobei weiter ein Modifikationsglied vorgesehen ist, um das anliegende Empfangssignal bei Übereinstimmung mit der Codefolge mit einem zweiten Faktor insbesondere gleich dem ersten Faktor skaliert auf das vorliegende Korrelationssignal aufzuaddieren. Das Dämpfungsglied hat dabei vorzugsweise eine Zeitkonstante in der Größenordnung der Dauer der Codefolge. Aufgrund der Dämpfung erinnert sich der Sensor zwar an frühere Übereinstimmungen zwischen Codefolge und Empfangssignal. Durch geeignete Wahl der Faktoren wirkt aber die aktuelle Übereinstimmung stärker, um auch solche Objektbewegungen zu erfassen, die deutlich schneller sind als die Dauer der Codefolge.

Der Sensor weist bevorzugt eine Auswertungseinheit auf, die dafür ausgebildet ist, das Korrelationssignal auszuwerten, um die Anwesenheit eines Objekts festzustellen, insbesondere das Korrelationssignal mit einer Schwelle zu bewerten und daraufhin ein binäres Objektfeststellungssignal auszugeben. Das Korrelationssignal glättet durch seine gleitende, rekursive Erzeugung die schnellen Änderungen des Empfangssignals, das zumindest mit jedem neuen Wert beziehungsweise Chip der Codefolge variiert. Die Logik zu dessen Bewertung kann deshalb langsamer arbeiten. Beispielsweise genügt ein wesentlich langsamerer und damit kostengünstigerer A/D-Wandler, wenn das Korrelationssignal digital bewertet werden soll. Bei direkter Digitalisierung des Empfangssignals selbst müsste zur Erfüllung des Abtasttheorems zumindest ein Abtastpunkt je Chip der Codefolge erfasst werden. Dagegen werden sämtliche relevanten Informationen des Korrelationssignals auch dann abgetastet, wenn die Abtastrate in der Größenordnung von nur einem Abtastpunkt je Dauer der ganzen Codefolge liegt.

Die Codefolge ist bevorzugt eine binäre Pseudozufallszahlenfolge. Sie unterscheidet sich dann in sich nicht von einem zufälligen Rauschen, ist somit optimal spektral verteilt und deshalb robust gegenüber Störungen in einzelnen Frequenzbändern. Erst mit Kenntnis der Pseudozufallszahlenfolge kann durch Korrelation die relevante Information rekonstruiert werden. Dabei werden auf dem optischen Weg bevorzugt binäre Werte mit {0;1} codiert, da es kein negatives Lichtsignal gibt. Auf den elektrischen Wegen erfolgt vorzugsweise eine Konvertierung auf die Werte {-1;1}, so dass bei der Korrelation durch einfache Multiplikation negative Signale entstehen, die besonders einfach zur rekursiven Modifikation verwendbar sind. Es sind verschiedene geeignete Pseudozufallsfolgen bekannt, wie sie auch beispielhaft in der EP 2 015 110 A1 genannt werden, auf die ergänzend zu allgemeinen Merkmalen eines optoelektronischen Sensors mit Pseudozufallszahlcodierung verwiesen wird, etwa M-Sequenzen, Gold-Sequenzen, Kasami-Sequenzen, Hadamard-Walsh-Sequenzen oder Barker-Sequenzen.

Die Korrelationseinheit weist bevorzugt einen analogen Schaltkreis auf. Die erfindungsgemäße rekursive Korrelation ist einfach genug, um sie mit ganz wenigen analogen Elementen und damit äußerst kostengünstig und mit geringstem Bauraumbedarf zu implementieren. Der Schaltkreis weist dabei besonders bevorzugt einen ersten Eingang für die Codefolge, einen zweiten Eingang für das Empfangsignal und einen Ausgang für das Korrelationssignal auf. Damit werden durch eine einfache analoge Schaltung die beiden Eingangsgrößen Codefolge und Empfangssignal verglichen und daraus durch gleitende, rekursive Korrelation das Korrelationssignal bereitgestellt.

Der Schaltkreis weist bevorzugt einen positiven Zweig für das Empfangssignal mit positivem Vorzeichen und einen zu dem positiven Zweig parallelen negativen Zweig für das Empfangssignal mit negativem Vorzeichen auf, wobei ein Schalter vorgesehen ist, dessen Schaltzustand von der Codefolge bestimmt ist, um den zweiten Eingang entweder über den positiven Zweig oder über den negativen Zweig mit dem Ausgang zu verbinden. In den beiden Zweigen wird damit das momentan anliegende Empfangssignal zur rekursiven Modifikation des vorliegenden Korrelationssignals mit dem Vorzeichen bereitgestellt, welches der aktuellen Übereinstimmung zwischen Codefolge und Empfangssignal entspricht. Dazu fungiert die Codefolge als Steuergröße eines Schalters zwischen den beiden Zweigen, um jeweils das richtige Vorzeichen festzulegen. Dieses Schalten entspricht einer binären punktweisen Multiplikation.

Den Zweigen ist bevorzugt ein analoger Signalspeicher zugeordnet. Dabei sind verschiedene Varianten möglich. Es kann nur ein gemeinsamer Signalspeicher von beiden Zweigen verwendet werden, oder jeder Zweig hat einen eigenen Signalspeicher. Als besonders einfaches analoges Element zur Implementierung des Signalspeichers eignen sich ein oder mehrere Kondensatoren, die von dem vorzeichenbehafteten Empfangssignal be- oder entladen werden.

Der positive Zweig und der negative Zweig weisen in einer vorteilhaften Ausführungsform jeweils eine Parallelschaltung aus einem analogen Signalspeicher, insbesondere einem Kondensator, und einem Entladeglied, insbesondere einem Widerstand auf. Je nach durch die Codefolge bestimmtem Schalterzustand wird der Kondensator des einen oder des anderen Zweiges aufgeladen, um das Korrelationssignal rekursiv zu modifizieren. Durch den Widerstand fließt ständig Ladung ab, so dass die gewünschte exponentielle Dämpfung des vorliegenden Korrelationssignals erfolgt.

In einer weiteren vorteilhaften Ausführungsform ist nach dem zweiten Eingang eine Parallelschaltung aus einem ersten Kondensator mit einer ersten Kapazität und dem Schalter vorgesehen, wobei der positive Zweig und der negative Zweig jeweils einen Kondensator mit einer zweiten Kapazität aufweisen, so dass je nach Stellung des Schalters eine Umladung zwischen dem ersten Kondensator einerseits und dem Kondensator des durch den Schalter verbundenen positiven Zweigs oder negativen Zweigs erfolgt. Das Ausmaß der Umladung und damit der Faktor, mit dem das Korrelationssignal jeweils modifiziert werden soll, wird dabei durch das Verhältnis zwischen der ersten Kapazität und der zweiten Kapazität bestimmt. Dabei können die Kapazitäten sehr klein gewählt werden, was besonders dann von Vorteil ist, wenn der analoge Schaltkreis der Korrelationseinheit in einem ASIC oder einer vergleichbaren Struktur integriert werden soll.

Noch eine weitere vorteilhafte Ausführungsform sieht vor, dass der negative Zweig einen analogen Inverter aufweist. Damit wird der Vorzeichenwechsel des Empfangssignals in den beiden Zweigen auf direkte und einfache Weise bewirkt.

Bevorzugt erfolgt dabei nach dem zweiten Eingang eine Aufspaltung in den positiven Zweig und den negativen Zweig, und der Schalter führt nachgeordnet den positiven Zweig und den negativen Zweig zusammen. Damit wird das Empfangssignal direkt hinter dem zweiten Eingang in die beiden Zweige aufgeteilt und dann auf den Schalter geführt, so dass mit den beiden Schalterzuständen wahlweise das Empfangssignal oder dessen Negation weitergegeben wird. Besonders bevorzugt ist dann zwischen dem Schalter und dem Ausgang eine Parallelschaltung aus einem analogen Signalspeicher, insbesondere einem Kondensator, und einem Entladeglied, insbesondere einem Widerstand vorgesehen. Hinter dem Schalter gibt es demnach nur einen gemeinsamen Zweig, dessen Signalspeicher durch den mit der Codefolge gesteuerten Schalter jeweils mit dem Empfangssignal oder dessen Negation beladen wird. Der Widerstand sorgt dabei wie schon in anderen Ausführungsformen für die exponentielle Dämpfung.

In vorteilhafter Weiterbildung weist der Lichtempfänger eine Vielzahl von Pixeln zur Erzeugung eines jeweiligen Einzelempfangssignals aus dem empfangenen Lichtsignal auf, wobei die Korrelationseinheit dafür ausgebildet ist, die Codefolge mit jedem Einzelempfangssignal zu korrelieren. Die einfache erfindungsgemäße Korrelation ist besonders geeignet, um auch eine Vielzahl von Korrelationssignalen parallel zu erzeugen.

Das kann beispielsweise ausgenutzt werden, um anschließend eine Auswahl von Pixeln zu treffen, deren Einzelempfangssignale ein Mindestmaß an Korrelation mit der Codefolge aufweisen oder die am stärksten mit der Codefolge korrelieren. Der Lichtfleck des eigenen Sendelichts des Sensors trifft nämlich in der Regel nur einen Teil der Pixel. Die übrigen Pixel werden lediglich von Fremdlicht beaufschlagt. Trifft man dann keine Auswahl, sondern wertet alle Pixel gleichgewichtet aus, so besteht der einzige Beitrag dieser übrigen Pixel darin, das Signal/Rauschverhältnis zu verschlechtern. Durch Korrelation mit der Codefolge können auf besonders robuste und zuverlässige Weise diejenigen Pixel selektiert werden, die einen nennenswerten Nutzlichtanteil aufweisen, weil sie von dem Lichtfleck getroffen sind. Pixel außerhalb des Lichtflecks, die somit nicht vom Sendelicht getroffen werden, erzeugen nach Korrelation mit der Codefolge weiterhin lediglich ein Rauschen und können deshalb leicht herausgefiltert werden, beispielsweise durch eine Schwellbewertung. Im Anschluss an die Pixelauswahl können die Korrelationssignale der ausgewählten Pixel additiv zu einem oder mehreren Auswertungskanälen zusammengefasst werden, und die entstehenden Gesamtsignale werden dann zur Objekterkennung ausgewertet.

Die Korrelationseinheit ist bevorzugt in den Lichtempfänger integriert. Damit entsteht ein besonders kompakter Aufbau. Insbesondere erfolgt die Integration als je ein analoger Schaltkreis in jedem Pixel des Lichtempfängers. Dabei entstehen "smart pixel", die nicht nur als Lichtempfänger dienen, sondern die zugleich schon einen erheblichen Anteil der Auswertung vornehmen. Anstelle eines einfachen Lichtsignals können solche smart pixel unmittelbar das Korrelationssignal ausgeben. Gerade bei ortsaufgelösten Lichtempfängern mit einer Vielzahl von Pixeln ist ein solcher kompakter Aufbau vorteilhaft, um kleine Sensoren herzustellen. Zudem erleichtern die extrem kurzen Signalwege die nachgeordnete Signalauswertung und -aufbereitung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines erfindungsgemäßen Sensors;
- Fig. 2: eine Blockdarstellung des abstrakten Systemmodells einer Korrelationseinheit zur rekursiven gleitenden Korrelation für die Signalauswertung des Sensors gemäß Figur 1;
- Fig. 3: ein Schaltbild für eine konkrete analoge Ausführungsform der Korrelationseinheit gemäß Figur 2;
- Fig. 4: ein Schaltbild für eine weitere konkrete analoge Ausführungsform der Korrelationseinheit gemäß Figur 2; und
- Fig. 5: ein Schaltbild für eine weitere konkrete analoge Ausführungsform der Korrelationseinheit gemäß Figur 2;

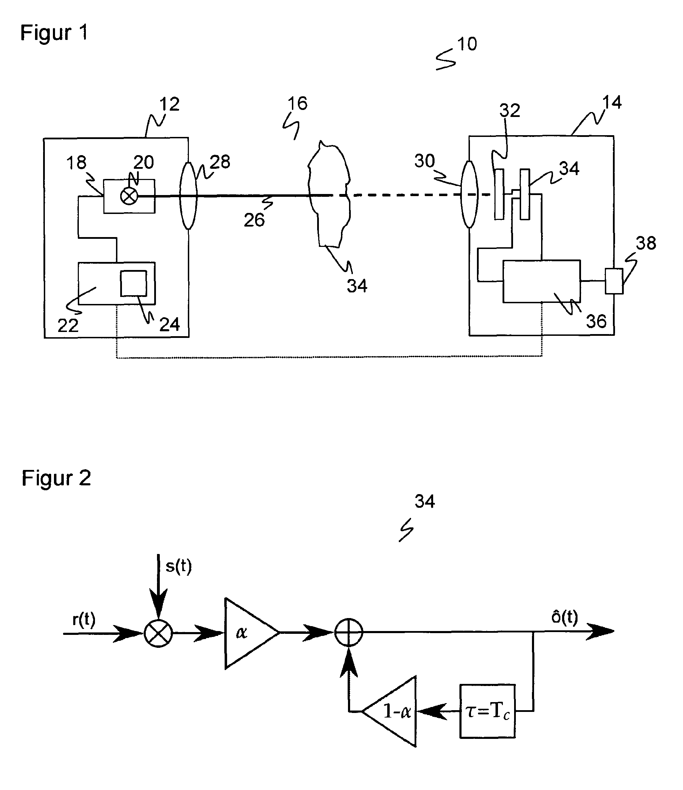

Figur 1 zeigt eine Blockdarstellung einer Ausführungsform eines erfindungsgemäßen Sensors 10 als Einweglichtschranke. Die Erfindung ist aber nicht auf Einweglichtschranken beschränkt und insbesondere auch bei den weiteren einleitend genannten Sensortypen einsetzbar. Bei allen diese Sensortypen ist weiterhin möglich, mehrere Sensoren parallel zueinander anzuordnen und so ein Lichtgitter oder ein tastendes Lichtgitter zu bilden

Der Sensor 10 weist einen Sendeblock 12 und einen Empfangsblock 14 auf, zwischen denen sich ein Überwachungsbereich 16 befindet. Der Sendeblock 12 umfasst einen Lichtsender 18 mit einer Lichtquelle 20, beispielsweise einem Laser oder einer LED, und eine Sende-Steuereinheit 22. In der Sende-Steuereinheit befindet sich eine Codefolgenbereitstellungseinheit 24, in der eine Pseudozufallszahlenfolge erzeugt oder aus einem Speicher ausgelesen wird. Durch entsprechende Ansteuerung der Sende-Steuereinheit 22 sendet der Lichtsender 18 ein Lichtsignal 26 aus, das mit der Pseudozufallszahlenfolge codiert ist. Dazu wird beispielsweise eine binäre Pseudozufallszahlenfolge durch Pulse einer vorgegebenen Länge und entsprechende Pulspausen codiert.

Das über eine Sendeoptik 28 gebündelte Lichtsignal 26 fällt bei freiem Überwachungsbereich 16 über eine Empfangsoptik 30 auf einen Lichtempfänger 32 des Empfangsblocks 14, beispielsweise eine Photodiode oder einen pixelaufgelösten Matrixbildsensor. Das einfallende Lichtsignal 26 wird in dem Lichtempfänger 32 in ein elektrisches Empfangssignal umgewandelt und einer Korrelationseinheit 34 zugeführt. Als zweites Eingangssignal erhält die Korrelationseinheit 34 die Pseudozufallszahlenfolge der Codefolgenbereitstellungseinheit 24 von einer Auswertungseinheit 36 in dem Empfangsblock 14.

Sende-Steuereinheit 22 und Auswertungseinheit 36 können wie durch eine gepunktete Linie dargestellt miteinander verbunden sein und sich die Steuerungs- und Auswertungsaufgaben teilen. Alternativ sind Sendeblock 12 und Empfangsblock 14 jeweils autark, und es findet eine optische Synchronisation über das Lichtsignal 26 statt. Es ist aber sicherzustellen, dass zwischen Sende-Steuereinheit 22 und Korrelationseinheit 34 Einigkeit über die verwendete Pseudozufallszahlenfolge besteht. Dazu muss nicht unbedingt die gepunktete dargestellte Verbindung zwischen Sendeblock 12 und Empfangsblock 14 bestehen, es kann alternativ auch eine nicht dargestellte zweite Codefolgenbereitstellungseinheit in dem Empfangsblock 14 vorgesehen sein, die mit der Codefolgenbereitstellungseinheit insoweit übereinstimmt, als sie dieselbe Pseudozufallszahlenfolge erzeugt.

In der Korrelationseinheit 34 werden das Lichtsignal 26 und die bekannte Pseudozufallszahlenfolge miteinander korreliert, und das entstehende Korrelationssignal wird der Auswertungseinheit 36 zugeführt. Bei freiem Strahlengang wird die in dem Lichtsignal 26 codierte Pseudozufallszahlenfolge mit identischen, über den zweiten Eingang der Korrelationseinheit 34 zugeführten, zur Strahlcodierung verwendeten Pseudozufallszahlenfolge korreliert. Das führt zu einem starken Korrelationssignal. Befindet sich dagegen ein Objekt 38 in dem Überwachungsbereich 16, welches das Lichtsignal 26 unterbricht, so fällt allenfalls Fremdlicht auf den Lichtempfänger 32. Fremdlicht ist aber unkorreliert mit der Pseudozufallszahlenfolge, so dass kein signifikantes Korrelationssignal entsteht. Die Auswertungseinheit 36 erkennt daran die Anwesenheit oder Abwesenheit eines Objekts 38 in dem Überwachungsbereich 16, beispielsweise durch eine Schwellbewertung des Korrelationssignals, und legt ein entsprechendes binäres Objektfeststellungssignal auf einen Ausgang 40.

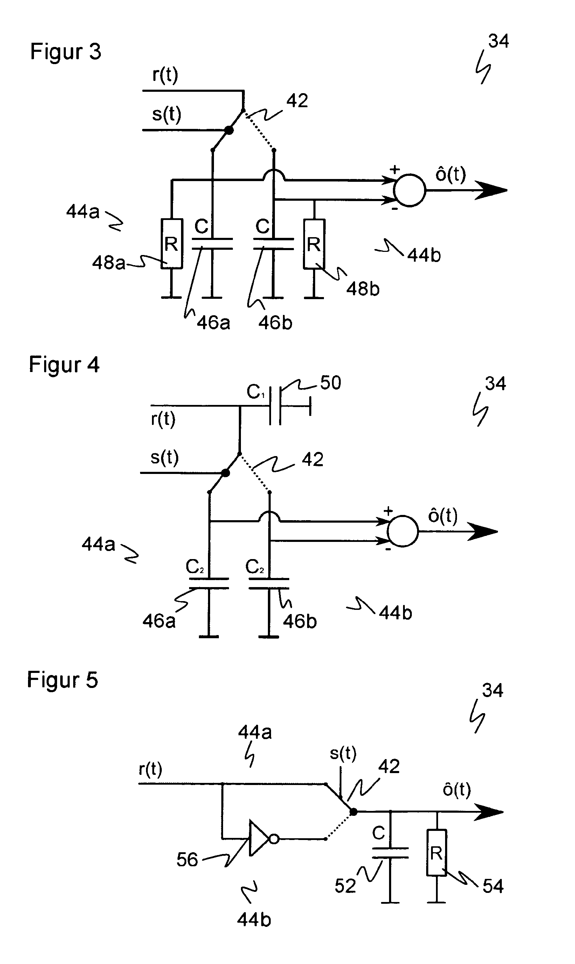

Die Korrelationseinheit 34 korreliert das Lichtsignal 26 und die Pseudozufallszahlenfolge mit einer rekursiven, gleitenden Korrelation, die besonders einfach implementierbar ist und im Folgenden zunächst abstrakt anhand eines in Figur 2 gezeigten Systemmodels und dann in drei beispielhaften analogen Realisierungen anhand der Figuren 3 bis 5 erläutert wird.

Bei der Objektdetektion ist das eigentliche Ziel, anders als bei klassischer nachrichtentechnischer Datenübertragung, nicht die Detektion der in dem gesendeten Lichtsignal 26 codierten Information, sondern die Rekonstruktion beziehungsweise Schätzung des Intensitätsverlaufs des zu detektierenden Objekts 38. Hierbei dient das Empfangssignal als Messsignal, um den optischen Kanal abzutasten.

Figur 2 zeigt das abstrakte zugrundeliegende Systemmodell. Das Sendesignal s(t) ist eine Pseudozufallszahlenfolge oder PN-Sequenz, die aus L Chips der Dauer T_{C} besteht. Auf dem optischen Kanal, also dem Lichtweg des Lichtsignals 26 durch den Überwachungsbereich 16, wird das Sendesignal s(t) durch die zu detektierenden Objekte 38 bei deren Ein- und Ausfahren in den Überwachungsbereich 16 gedämpft beziehungsweise vollständig abgedeckt. Dem Sendesignal s(t) wird durch das Objekt 38 ein bestimmter Intensitätsverlauf aufgeprägt. Der Einfluss des Objekts 38 wird durch die Funktion o(t) beschrieben, die Werte im Intervall [0, 1] annehmen kann.

Das Empfangssignal r(t) ergibt sich dann bei additivem Rauschen n(t) zu r(t)=s(t)o(t)+n(t). Um Objekte 38 sicher zu detektieren, kann die Zeitdauer LT_{C} einer Pseudozufallszahlenfolge deutlich kürzer gewählt werden als die zeitliche Dynamik von o(t), d.h. Objekte 38 fahren dann im Vergleich zum Detektionstakt langsam ein. Bei herkömmlicher blockweiser Korrelation würde dennoch der Schaltzeitpunkt erheblich verzögert und verjittert.

Deshalb verwendet die Korrelationseinheit 34 die in Figur 2 gezeigte gleitende, rekursive Korrelation mit exponentieller Glättung (ESC, exponential smoothing correlation). Dazu wird das Empfangssignal r(t) mit der gesendeten Pseudozufallszahlenfolge s(t) multipliziert. Da die Korrelation punktweise bestimmt wird, ist dazu eine phasenrichtige zeitliche Verschiebung zwischen s(t) und r(t) erforderlich. Dies kann beispielsweise durch anfängliches Parametrieren oder Einlernen der Signallaufwege erreicht werden, oder es wird einmalig eine vollständige Korrelationsfunktion berechnet und daraus die erforderliche Phase entnommen.

Das aus der Multiplikation resultierende Signal wird mit einem Faktor α gewichtet und zu dem mit einem Faktor β, beispielsweise β=1-α gewichteten und um eine Chipdauer T_{C} verzögerten Ausgangssignal ö(t) addiert. Das dabei entstehende Ausgangsignal ö(t) ist das gesuchte Korrelationssignal und bildet eine geglättete Schätzung des Intensitätsverlaufs o(t) des zu detektierenden Objekts.

Im Gegensatz zu einem Korrelator, der blockweise vollständige Funktionen korreliert, bedarf der erläuterte Korrelator nur ganz weniger einfacher Elemente. Daher lässt sich die Korrelationseinheit 34 auch in einfachen analogen Schaltkreisen implementieren.

Figur 3 zeigt eine Ausführungsform der Korrelationseinheit 34 als analoger Schaltkreis. Das Empfangssignal r(t), also beispielsweise der Fotodiodenstrom des Lichtempfängers 32, liegt dem einen Eingang der Korrelationseinheit 34 an und wird auf einen Schalter 42 geführt, dessen jeweiliger Schaltzustand von dem Sendesignal s(t) an dem anderen Eingang der Korrelationseinheit 34 bestimmt ist. Der Schalter stellt wahlweise eine Verbindung zu einem positiven Zweig 44a oder einem hierzu parallelen negativen Zweig 44b her. In beiden Zweigen 44a-b sind jeweils ein Kondensator 46a-b und ein Widerstand 48a-b parallel geschaltet. Beide Zweige 44a-b werden auf den Ausgang der Korrelationseinheit 34 zusammengeführt.

Damit wird das Empfangssignal r(t) wechselseitig auf die beiden Kondensatoren 46a-b aufintegriert, die zwei analoge Signalspeicher bilden. Positive Chips mit s(t)=+1 werden auf den einen Kondensator 46a, negative Chips mit s(t) =-1 auf den anderen Kondensator 46b geladen. Zugleich erfolgt eine zeitliche Wichtung der Signale, bei der ältere Signale durch Ladungsabfluss über die Widerstände 48a-b gedämpft und neuere Signale somit stärker gewichtet werden. Die Zeitkonstante RC der Kondensator-Widerstand-Parallelschaltungen in den beiden Zweigen 44a-b liegt beispielsweise in derselben Größenordnung wie die Dauer der Pseudozufallszahlenfolge LT_{C}, so dass das Gedächtnis der rekursiven Korrelation in etwa der Dauer der herkömmlichen blockweisen Korrelation entspricht.

Figur 4 zeigt eine alternative Ausführungsform der Korrelationseinheit 34 als analoger Schaltkreis. Dabei werden die Widerstände 48a-b der Ausführungsform gemäß Figur 3 durch einen weiteren Kondensator 50 vor dem Schalter 42 ersetzt. Weiterhin wird der Schalter 42 durch das Sendesignal s(t) gesteuert, um das Empfangssignal r(t) wechselweise mit dem positiven Zweig 44a oder dem negativen Zweig 44b zu verbinden. Die gewünschte Zeitkonstante τ zur exponentiellen Gewichtung vergangener Korrelationswerte wird statt über Widerstände 48a-b durch das Verhältnis der Kapazitäten C₁ des Kondensators 50 und C₂ der Kondensatoren 46a-b eingestellt. Bei jedem Umschaltvorgang wird ein durch das Verhältnis von C₁ zu C₂ bestimmter Anteil der Ladung der Kondensatoren 46a-b, 50 umgeladen. Hierdurch kommt es zu einer exponentiellen Glättung gespeicherter Korrelationswerte. Wie auch bei den anderen Ausführungsformen ermöglicht diese kontinuierliche Auswertung des Ausgangs der Korrelationseinheit 34 eine Korrelation der verwendeten Pseudozufallszahlfolgen mit exponentieller Gewichtung eine Objektdetektion mit sehr präziser Reproduktion des Schaltzeitpunkts. Außerdem können die Kapazitäten C₁ und C₂ sehr klein gewählt werden, was die Integration beispielsweise in einem ASIC erleichtert.

Figur 5 zeigt eine weitere alternative Ausführungsform der Korrelationseinheit 34 als analoger Schaltkreis. Dabei ist hinter dem wie schon in den anderen Ausführungsformen von s(t) gesteuerten Schalter 42 nur ein gemeinsamer analoger Signalspeicher in Form eines Kondensators 52 vorgesehen, dessen Ladung zur exponentiellen Dämpfung über einen parallelen Widerstand 54 abfließen kann. Erneut kann die Zeitkonstante RC der Kondensator-Widerstand-Kombination in derselben Größenordnung gewählt werden wie die Dauer LT_{C} der Pseudozufallszahlenfolge.

Die Parallelschaltung aus dem positiven Zweig 44a und dem negativen Zweig 44b ist in dieser Ausführungsform schon vor dem Schalter 42 angeordnet, wobei das Empfangssignal r(t) direkt nach dem Eingang in die beiden Zweige 44a-b verzweigt wird. In dem negativen Zweig 44b ist ein analoger Invertierer 56 angeordnet. Somit wird je nach Schalterstellung, bedingt durch s(t), das Empfangssignal r(t) oder dessen Negation auf den Kondensator 52 geladen. Da hier die Differenz von positiven und negativen Chips auf einem einzigen gemeinsamen Kondensator 52 gespeichert wird, genügt bereits eine noch geringere Anzahl von analogen Bauteilen, um die Korrelationseinheit 34 zu realisieren.

Anstelle eines einfachen Lichtempfängers 32, wie in dem beispielhaften Sensor 10 der Figur 1 eingesetzt, kann auch ein ortsaufgelöster Lichtempfänger mit einer Vielzahl von zu einer Zeile oder einer Matrix angeordneten Pixeln eingesetzt werden. Solche Lichtempfänger werden beispielsweise in Lichttastern oder in ausrichtfreien Lichtschranken eingesetzt, bei denen die Lage des Lichtflecks auf dem Lichtempfänger je nach Montage oder Detektionssituation variieren kann. In diesem Fall ist vorteilhaft, wenn die beschriebene Korrelation parallel für mehrere oder alle Pixel durchgeführt wird. Dadurch können nämlich diejenigen Pixel selektiert werden, die tatsächlich vom Lichtsignal 26 beaufschlagt sind. Genau solche Pixel korrelieren nämlich in signifikanter Weise mit der Pseudozufallszahlenfolge, und genau diese Pixel enthalten das relevante Nutzsignal und nicht lediglich Fremdlichtanteile.

Aufgrund des einfachen Aufbaus der Korrelationseinheit 34 lässt sich eine solche mehrfache parallele Korrelation für die einzelnen Pixel mit wenig Aufwand realisieren. Besonders die analogen Realisierungen erlauben eine Korrelation mit ganz wenigen einfachsten Elementen. Dadurch ist es sogar möglich, die Korrelation direkt in die Pixel des ortsaufgelösten Lichtempfängers zu integrieren. Dabei entstehen smart pixel, die nicht nur die eingefangene Lichtmenge in einen Fotostrom umsetzen, sondern beispielsweise mit jeweils einer der Schaltungen gemäß Figuren 3 bis 5 bereits einen erheblichen Verarbeitungsschritt leisten, indem sie direkt das Korrelationssignal ausgeben.

## Patentansprüche

1. Optoelektronischer Sensor (10) zur Erfassung von Objekten (38) mit einem Lichtsender (18) zum Aussenden eines mit einer Codefolge modulierten Lichtsignals (26), einem Lichtempfänger (32) zum Erzeugen eines Empfangssignals aus dem empfangenen Lichtsignal (26) und einer Korrelationseinheit (34) zur Erzeugung eines Korrelationssignals aus dem Empfangssignal und der zur Modulation des ausgesandten Lichtsignals (26) verwendeten Codefolge,
**dadurch gekennzeichnet,**
**dass** die Korrelationseinheit (34) einen analogen Schaltkreis aufweist und dafür ausgebildet ist, das Korrelationssignal durch eine gleitende Korrelation zu bilden, bei der das vorliegende Korrelationssignal in Abhängigkeit von der Übereinstimmung zwischen dem anliegenden Empfangssignal und der Codefolge modifiziert wird, und dass die Korrelationseinheit (34) ein exponentielles Abklingverhalten aufweist, indem ein Dämpfungsglied (48, 50, 54) vorgesehen ist, um das vorliegende Korrelationssignal um einen ersten Faktor zu dämpfen

2. Sensor (10) nach Anspruch 1,
wobei ein Modifikationsglied (44) vorgesehen ist, um das anliegende Empfangssignal bei Übereinstimmung mit der Codefolge mit einem zweiten Faktor insbesondere gleich dem ersten Faktor skaliert auf das vorliegende Korrelationssignal aufzuaddieren.

3. Sensor (10) nach einem der vorhergehenden Ansprüche,
mit einer Auswertungseinheit (36), die dafür ausgebildet ist, das Korrelationssignal auszuwerten, um die Anwesenheit eines Objekts (38) festzustellen, insbesondere das Korrelationssignal mit einer Schwelle zu bewerten und daraufhin ein binäres Objektfeststellungssignal auszugeben.

4. Sensor (10) nach einem der vorhergehenden Ansprüche,
wobei die Codefolge eine binäre Pseudozufallszahlenfolge ist.

5. Sensor (10) nach einem der vorhergehenden Ansprüche,
wobei der analoge Schaltkreis einen ersten Eingang für die Codefolge, einen zweiten Eingang für das Empfangsignal und einen Ausgang für das Korrelationssignal aufweist.

6. Sensor (10) nach Anspruch 5,
wobei der Schaltkreis einen positiven Zweig (44a) für das Empfangssignal mit positivem Vorzeichen und einen zu dem positiven Zweig (44a) parallelen negativen Zweig (44b) für das Empfangssignal mit negativem Vorzeichen aufweist, wobei ein Schalter (42) vorgesehen ist, dessen Schaltzustand von der Codefolge bestimmt ist, um den zweiten Eingang entweder über den positiven Zweig (44a) oder über den negativen Zweig (44b) mit dem Ausgang zu verbinden.

7. Sensor (10) nach Anspruch 6,
wobei den Zweigen (44a-b) ein analoger Signalspeicher (46a-b, 52), insbesondere ein Kondensator zugeordnet ist.

8. Sensor (10) nach Anspruch 6 oder 7,
wobei der positive Zweig (44a) und der negative Zweig (44b) jeweils eine Parallelschaltung aus einem analogen Signalspeicher (46a-b), insbesondere einem Kondensator, und einem Entladeglied (48a-b), insbesondere einem Widerstand aufweisen.

9. Sensor (10) nach Anspruch 6 oder 7,
wobei nach dem zweiten Eingang eine Parallelschaltung aus einem ersten Kondensator (50) mit einer ersten Kapazität und dem Schalter (42) vorgesehen ist, und wobei der positive Zweig (44a) und der negative Zweig (44b) jeweils einen Kondensator (46a-b) mit einer zweiten Kapazität aufweisen, so dass je nach Stellung des Schalters (42) eine Umladung zwischen dem ersten Kondensator (50) einerseits und dem Kondensator (46a-b) des durch den Schalter (42) verbundenen positiven Zweigs (44a) oder negativen Zweigs (44b) erfolgt.

10. Sensor (10) nach Anspruch 6 oder 7,
wobei der negative Zweig (44b) einen analogen Inverter (56) aufweist.

11. Sensor (10) nach Anspruch 10,
wobei nach dem zweiten Eingang eine Aufspaltung in den positiven Zweig (44a) und den negativen Zweig (44b) erfolgt und der Schalter (42) nachgeordnet den positiven Zweig (44a) und den negativen Zweig (44b) zusammenführt, und wobei zwischen dem Schalter (42) und dem Ausgang eine Parallelschaltung aus einem analogen Signalspeicher (52), insbesondere einem Kondensator, und einem Entladeglied (54), insbesondere einem Widerstand vorgesehen ist.

12. Sensor (10) nach einem der vorhergehenden Ansprüche,
wobei der Lichtempfänger (32) eine Vielzahl von Pixeln zur Erzeugung eines jeweiligen Einzelempfangssignals aus dem empfangenen Lichtsignal (26) aufweist, und wobei die Korrelationseinheit (34) dafür ausgebildet ist, die Codefolge mit jedem Einzelempfangssignal zu korrelieren und daraufhin eine Auswahl von Pixeln zu treffen, deren Einzelempfangssignale ein Mindestmaß an Korrelation mit der Codefolge aufweisen oder die am stärksten mit der Codefolge korrelieren.

13. Sensor (10) nach einem der vorhergehenden Ansprüche,
wobei die Korrelationseinheit (34) in den Lichtempfänger (32) integriert ist, insbesondere der Lichtempfänger (32) eine Vielzahl von Pixeln zur Erzeugung eines jeweiligen Einzelempfangssignals aus dem empfangenen Lichtsignal (26) aufweist und die Korrelationseinheit (34) als je ein analoger Schaltkreis in jedem Pixel des Lichtempfängers (32) integriert ist.

14. Verfahren zur Erfassung von Objekten (38), bei dem ein mit einer Codefolge moduliertes Lichtsignal (26) ausgesandt und aus dem empfangenen Lichtsignal (26) ein Empfangssignal erzeugt wird, wobei ein Korrelationssignal aus dem Empfangssignal und der zur Modulation des ausgesandten Lichtsignals (26) verwendeten Codefolge gebildet wird,
**dadurch gekennzeichnet,**
**dass** das Korrelationssignal analog durch eine gleitende Korrelation gebildet wird, bei der das vorliegende Korrelationssignal in Abhängigkeit von der Übereinstimmung zwischen dem anliegenden Empfangssignal und der Codefolge modifiziert wird, wobei die gleitende Korrelation ein exponentielles Abklingverhalten aufweist, wodurch das vorliegende Korrelationssignal um einen ersten Faktor gedämpft wird.

15. Verfahren nach Anspruch 14,
wobei das vorliegende Korrelationssignal in Abhängigkeit von der Übereinstimmung zwischen dem anliegenden Empfangssignal und der Codefolge um das anliegende, mit einem zweiten Faktor insbesondere gleich dem ersten Faktor skalierte Empfangssignal modifiziert wird.

## Claims

1. An optoelectronic sensor (10) for detecting objects (38) having a light transmitter (18) for transmitting a light signal (26) modulated by a code sequence, having a light receiver (32) for producing a reception signal from the received light signal (26) and having a correlation unit (34) for producing a correlation signal from the reception signal and form the code sequence used for modulating the transmitted light signal (26),
**characterised in that**
the correlation unit (34) has an analogue circuit and is configured to form the correlation signal by a sliding correlation in which the correlation signal present is modified in dependence on the agreement between the applied reception signal and the code sequence; and **in that** the correlation unit (34) has an exponential decaying behaviour **in that** a damping member (48, 50, 54) is provided to damp the correlation signal present by a first factor.

2. A sensor (10) in accordance with claim 1,
wherein a modification member (44) is provided to add the applied reception signal scaled with a second factor, in particular equal to the first factor, to the correlation signal present on agreement with the code sequence.

3. A sensor (10) in accordance with one of the preceding claims, having an evaluation unit (36) which is configured to evaluate the correlation signal to determine the presence of an object (38), in particular to assess the correlation signal with a threshold and thereupon to output a binary object detection signal.

4. A sensor (10) in accordance with any one of the preceding claims,
wherein the code sequence is a pseudorandom binary sequence.

5. A sensor (10) in accordance with any one of the preceding claims,
wherein the analogue circuit has a first input for the code sequence, a second input for the reception signal and an output for the correlation signal.

6. A sensor (10) in accordance with claim 5,
wherein the circuit has a positive branch (44a) for the reception signal having a positive sign and a negative branch (44b) parallel to the positive branch (44a) for the reception signal having a negative sign, wherein a switch (42) is provided whose switched state is determined by the code sequence to connect the second input to the output either via the positive branch (44a) or via the negative branch (44b).

7. A sensor (10) in accordance with claim 6,
wherein an analogue signal store (46a-b, 52), in particular a capacitor, is associated with the branches (44a-b).

8. A sensor (10) in accordance with claim 6 or claim 7,
wherein the positive branch (44a) and the negative branch (44b) each have a parallel circuit of an analogue signal store (46-b), in particular a capacitor, and a discharge member (48a-b), in particular a resistor.

9. A sensor (10) in accordance with claim 6 or claim 7,
wherein a parallel circuit of a first capacitor (50) with a first capacitance and the switch (42) is provided after the second input, and wherein the positive branch (44a) and the negative branch (44b) each have a capacitor (46a-b) with a second capacitance so that a charge reversal takes place in dependence on the position of the switch (42) between the first capacitor (50), on the one hand, and the capacitor (46a-b) of the positive branch (44a) or negative branch (44b) connected by the switch (42).

10. A sensor (10) in accordance with claim 6 or claim 7,
wherein the negative branch (44b) has an analogue inverter (56).

11. A sensor (10) in accordance with claim 10,
wherein a division into the positive branch (44a) and the negative branch (44b) takes place after the second input and the switch (42) merges the positive branch (44a) and the negative branch (44b) downstream, and wherein a parallel circuit of an analogue signal store (52), in particular a capacitor, and a discharge member (54), in particular a resistor, is provided between the switch (42) and the output.

12. A sensor (10) in accordance with any one of the preceding claims,
wherein the light receiver (32) has a plurality of pixels for generating a respective single reception signal from the received light signal (26), and wherein the correlation unit (34) is configured to correlate the code sequence with each single reception signal and thereupon to make a selection of pixels whose single reception signals have a minimum degree of correlation with the code sequence or which correlate the most with the code sequence.

13. A sensor (10) in accordance with any one of the preceding claims,
wherein the correlation unit (34) is integrated into the light receiver (32), wherein the light receiver (32) in particular has a plurality of pixels for producing a respective single reception signal from the received light signal (20) and wherein the correlation unit (34) is integrated as a respective analogue circuit in each pixel of the light receiver (32).

14. A method of detecting objects (38), wherein a light signal (26) modulated by a code sequence is transmitted and a reception signal is produced from the received light signal (26), wherein a correlation signal is formed from the reception signal and from the code sequence used for modulating the transmitted light signal (26), **characterised in that**
the correlation signal is formed in an analogue manner by a sliding correlation in which the correlation signal present is modified in dependence on the agreement between the reception signal applied and the code sequence, wherein the sliding correlation has an exponential decaying behaviour, whereby the correlation signal present is damped by a first factor.

15. A method in accordance with claim 14,
wherein the correlation signal present is modified by the reception signal applied scaled with a second factor, in particular equal to the first factor, in dependence on the agreement between the reception signal applied and the code sequence.

## Revendications

1. Capteur optoélectronique (10) pour la détection d'objets (38) comprenant un émetteur de lumière (18) pour émettre un signal lumineux (26) modulé avec une succession codée, un récepteur de lumière (32) pour générer un signal de réception à partir du signal lumineux reçu (26), et une unité de corrélation (34) pour générer un signal de corrélation à partir du signal de réception et de la succession codée utilisée pour la modulation du signal lumineux émis (26),
**caractérisé en ce que**
l'unité de corrélation (34) comprend un circuit analogique et est réalisée pour former le signal de corrélation par une corrélation glissante dans laquelle le signal de corrélation présent est modifié en fonction de la coïncidence entre le signal de réception appliqué et la succession codée, et **en ce que** l'unité de corrélation (34) présente un comportement à décroissance exponentielle, du fait qu'il est prévu un composant d'amortissement (48, 50, 54) afin d'amortir le signal de corrélation présent par un premier facteur.

2. Capteur (10) selon la revendication 1,
dans lequel il est prévu un composant de modification (44) afin d'additionner, en cas de coïncidence avec la succession codée, le signal de réception appliqué mis à l'échelle au moyen d'un second facteur, en particulier égal au premier facteur, au signal de corrélation présent.

3. Capteur (10) selon l'une des revendications précédentes,
comprenant une unité d'évaluation (36) qui est réalisée pour évaluer le signal de corrélation, afin de constater la présence d'un objet (38), en particulier d'évaluer le signal de corrélation avec un seuil et de délivrer ensuite un signal binaire de constatation d'objet.

4. Capteur (10) selon l'une des revendications précédentes,
dans lequel la succession codée est une succession pseudo-aléatoire de nombres binaires.

5. Capteur (10) selon l'une des revendications précédentes,
dans lequel le circuit analogique comprend une première entrée pour la succession codée, une seconde entrée pour le signal de réception, et une sortie pour le signal de corrélation.

6. Capteur (10) selon la revendication 5,
dans lequel le circuit comprend une branche positive (44a) pour le signal de réception avec un signe positif, et une branche négative (44b), parallèle à la branche positive (44a), pour le signal de réception avec un signe négatif, dans lequel il est prévu un commutateur (42), dont l'état de commutation est déterminé par la succession codée, afin de connecter la seconde entrée à la sortie soit via la branche positive (44a) soit via la branche négative (44b).

7. Capteur (10) selon la revendication 6,
dans lequel un accumulateur de signal analogique (46a-b, 52), en particulier un condensateur, est associé aux branches (44a-b).

8. Capteur (10) selon la revendication 6 ou 7,
dans lequel la branche positive (44a) et la branche négative (44b) comportent chacune un circuit parallèle formé d'un accumulateur de signal analogique (46a-b), en particulier un condensateur, et d'un composant de décharge (48a-b), en particulier une résistance.

9. Capteur (10) selon la revendication 6 ou 7,
dans lequel il est prévu après la seconde entrée un circuit parallèle formé d'un premier condensateur (50) avec une première capacité et du commutateur (42), et dans lequel la branche positive (44a) et la branche négative (44b) comprennent chacune un condensateur (46a-b) avec une seconde capacité, de sorte que selon la position du commutateur (42) il se produit un transfert de charge entre le premier condensateur (50) d'une part et le condensateur (46a-b) de la branche positive (44a) ou de la branche négative (44b) connectée par le commutateur (42).

10. Capteur (10) selon la revendication 6 ou 7,
dans lequel la branche négative (44b) comprend un inverseur analogique (56).

11. Capteur (10) selon la revendication 10,
dans lequel une scission pour donner la branche positive (44a) et la branche négative (44b) a lieu après la seconde entrée, et le commutateur (42) placé à la suite rassemble la branche positive (44a) et la branche négative (44b), et dans lequel entre le commutateur (42) et la sortie, il est prévu un circuit parallèle formé d'un accumulateur de signal analogique (52), en particulier un condensateur, et d'un composant de décharge (54), en particulier une résistance.

12. Capteur (10) selon l'une des revendications précédentes,
dans lequel le récepteur de lumière (32) comprend une pluralité de pixels pour générer un signal de réception individuel respectif à partir du signal lumineux reçu (26), et dans lequel l'unité de corrélation (34) est réalisée pour corréler la succession codée avec chaque signal de réception individuel et procéder ensuite à une sélection de pixels dont les signaux de réception individuels présentent un degré minimum de corrélation avec la succession codée ou présentent la plus forte corrélation avec la succession codée.

13. Capteur (10) selon l'une des revendications précédentes,
dans lequel l'unité de corrélation (34) est intégrée dans le récepteur de lumière (32), en particulier le récepteur de lumière (32) comprend une pluralité de pixels pour générer un signal de réception individuel respectif à partir du signal lumineux reçu (26), et l'unité de corrélation (34) est intégrée sous forme d'un circuit analogique respectif dans chaque pixel du récepteur de lumière (32)

14. Procédé pour la détection d'objets (38), dans lequel on émet un signal lumineux (26) modulé avec une succession codée, et on engendre à partir du signal lumineux reçu (26) un signal de réception, et un signal de corrélation est formé à partir du signal de réception et de la succession codée utilisée pour la modulation du signal lumineux émis (26),
**caractérisé en ce que**
le signal de corrélation est formé de manière analogique par une corrélation glissante dans laquelle le signal de corrélation présent est modifié en fonction de la coïncidence entre le signal de réception appliqué et la succession codée, la corrélation glissante présentant un comportement de décroissance exponentielle, grâce à quoi le signal de corrélation présent est amorti d'un premier facteur.

15. Procédé selon la revendication 14,
dans lequel le signal de corrélation présent est modifié en fonction de la coïncidence entre le signal de réception appliqué et la succession codée, par le signal de réception appliqué mis à l'échelle avec un second facteur, en particulier égal au premier facteur.
